(19) **Europäisches Patentamt / European Patent Office / Office européen des brevets**

(11) **EP 4 637 135 A1**

(12) **EUROPEAN PATENT APPLICATION**
published in accordance with Art. 153(4) EPC

(43) Date of publication:
**22.10.2025 Bulletin 2025/43**

(21) Application number: **23903005.9**

(22) Date of filing: **11.07.2023**

(51) International Patent Classification (IPC):
*H04N 13/133* (2018.01)    *G09G 5/02* (2006.01)
*G09G 5/36* (2006.01)    *H04N 13/122* (2018.01)
*H04N 13/15* (2018.01)

(52) Cooperative Patent Classification (CPC):
G09G 5/02; G09G 5/36; H04N 13/122;
H04N 13/133; H04N 13/15

(86) International application number:
**PCT/JP2023/025620**

(87) International publication number:
**WO 2024/127699 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022 JP 2022199539**

(71) Applicant: **Nikon-Essilor Co., Ltd.**
**Tokyo 130-0026 (JP)**

(72) Inventor: **SATO, Tetsuo**
**Tokyo 130-0026 (JP)**

(74) Representative: **Viering, Jentschura & Partner mbB**
**Patent- und Rechtsanwälte**
**Grillparzerstraße 14**
**81675 München (DE)**

(54) **IMAGE PROCESSING DEVICE, IMAGE DISPLAYING SYSTEM, IMAGE PROCESSING METHOD, AND IMAGE PROCESSING PROGRAM**

(57) [Means to Solve Problem] An image processor includes: an acquirer that acquires a left-eye source image and a right-eye source image; a generator that generates a left-eye display image and a right-eye display image on the basis of the left-eye source image and the right-eye source image acquired by the acquirer; and an outputter that outputs the left-eye display image and the right-eye display image generated by the generator, wherein the generator corrects at least one of the left-eye source image and the right-eye source image so that a color difference between the left-eye display image and the right-eye display image becomes a predetermined value.

FIG.2

EP 4 637 135 A1

## Description

Technical Field

The present invention relates to an image processor, an image display system, an image processing method, and an image processing program.

Background Art

For example, as disclosed in Patent Literature 1, a stereoscopic presentation method is used in which separate images are presented to the left and right eyes, and the image is presented stereoscopically (in 3D) on the basis of binocular parallax. In such stereoscopic presentation methods, there remains room for improvement in visibility, as the presented images may appear unnatural or make it difficult to perceive a sense of depth.

Citation List

Patent Literature

[Patent Literature 1] Japanese Unexamined Patent Application, First Publication No. 2016-177281

Summary of Invention

According to a first aspect of the present invention, there is provided an image processor including: an acquirer that acquires a left-eye source image and a right-eye source image; a generator that generates a left-eye display image and a right-eye display image on the basis of the left-eye source image and the right-eye source image acquired by the acquirer; and an outputter that outputs the left-eye display image and the right-eye display image generated by the generator, wherein the generator corrects at least one of the left-eye source image and the right-eye source image so that a color difference between the left-eye display image and the right-eye display image becomes a predetermined value.

According to a second aspect of the present invention, there is provided an image display system including: the image processor according to the above aspect; and a display having a displayer capable of displaying the left-eye display image and the right-eye display image output from the outputter.

According to a third aspect of the present invention, there is provided an image processing method including: acquiring a left-eye source image and a right-eye source image; generating a left-eye display image and a right-eye display image on the basis of the left-eye source image and the right-eye source image acquired; and outputting the left-eye display image and the right-eye display image generated, wherein in generating the left-eye display image and the right-eye display image, at least one of the left-eye source image and the right-eye source image is corrected so that a color difference between the left-eye display image and the right-eye display image becomes a predetermined value.

According to a fourth aspect of the present invention, there is provided image processing program that causes a computer to execute processes of: acquiring a left-eye source image and a right-eye source image; generating a left-eye display image and a right-eye display image on the basis of the left-eye source image and the right-eye source image acquired; and outputting the left-eye display image and the right-eye display image generated, wherein in generating the left-eye display image and the right-eye display image, at least one of the left-eye source image and the right-eye source image is corrected so that a color difference between the left-eye display image and the right-eye display image becomes a predetermined value.

Brief Description of the Drawings

Fig. 1 is a diagram showing an example of an external appearance of an image display system according to a first embodiment.
Fig. 2 is a functional block diagram showing an example of the image display system according to the first embodiment.
Fig. 3 is a diagram showing an example of a source image that appears stereoscopic according to the first embodiment and a left-eye source image and a right-eye source image included in the source image.
Fig. 4 is a diagram showing an example of a left-eye display image and a right-eye display image generated by correcting respective pixels in the left-eye source image and the right-eye source image according to the first embodiment.

Fig. 5 is a diagram showing an example of a display image that includes the left-eye display image and the right-eye display image, according to the first embodiment.

Fig. 6 is a flowchart showing an example of an image processing method according to the first embodiment.

Fig. 7 is a diagram showing an example of a left-eye display image and a right-eye display image generated by correcting respective pixels in a left-eye source image and a right-eye source image according to a second embodiment.

Fig. 8 is a flowchart showing an example of an image processing method in an image display system according to a third embodiment.

Fig. 9 is a functional block diagram showing an example of an image display system according to a fourth embodiment.

Fig. 10 is a flowchart showing an example of the image processing method in the image display system according to the fourth embodiment.

Fig. 11 is a diagram showing an example of an image display system according to a fifth embodiment.

Fig. 12 is a diagram showing an example of an image display system according to a sixth embodiment.

Description of Embodiments

The following describes embodiments of the present invention, with reference to the drawings. However, the invention is not limited to the contents described below. In the drawings, scale is changed as necessary to illustrate the embodiments, such as by enlarging or emphasizing a portion, and thus, the embodiments may differ from the actual product in shape and size in some cases.

[First Embodiment]

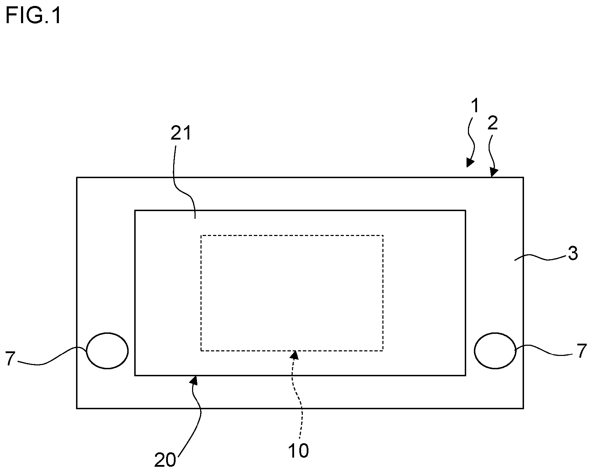

Hereunder, a first embodiment will be described. Fig. 1 is a diagram showing an example of the external appearance of an image display system according to the first embodiment. As shown in Fig. 1, an image display system 1 according to the present embodiment is, for example, a computer terminal 2 that is portable. The computer terminal 2 serving as the image display system 1 includes a casing 3, an image processor 10 included in the casing 3, and a display 20. The image processor 10 and the display 20 are included in the same casing 3. Examples of the computer terminal 2 having the image processor 10 and the display 20 in the same casing 3 include a gaming terminal, a smartphone, a tablet terminal, and the like.

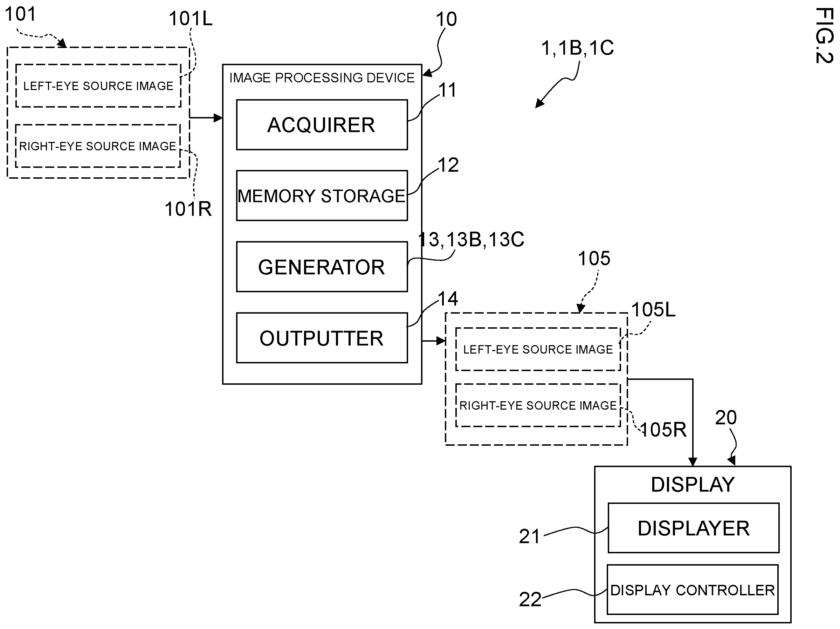

Fig. 2 is a functional block diagram showing an example of the image display system according to the first embodiment. As shown in Fig. 2, the image processor 10 acquires data of a source image 101 that serves as a basis of an image to be displayed on the display 20. The image processor 10 generates a display image 105 to be displayed on the display 20 on the basis of the source image 101 from which data has been acquired. The image processor 10 outputs the generated data of the display image 105 to the display 20. The display 20 displays the display image 105, which appears stereoscopic, on the basis of the data output by the image processor 10. The image processor 10 functionally includes an acquirer 11, a memory storage 12, a generator 13, and an outputter 14.

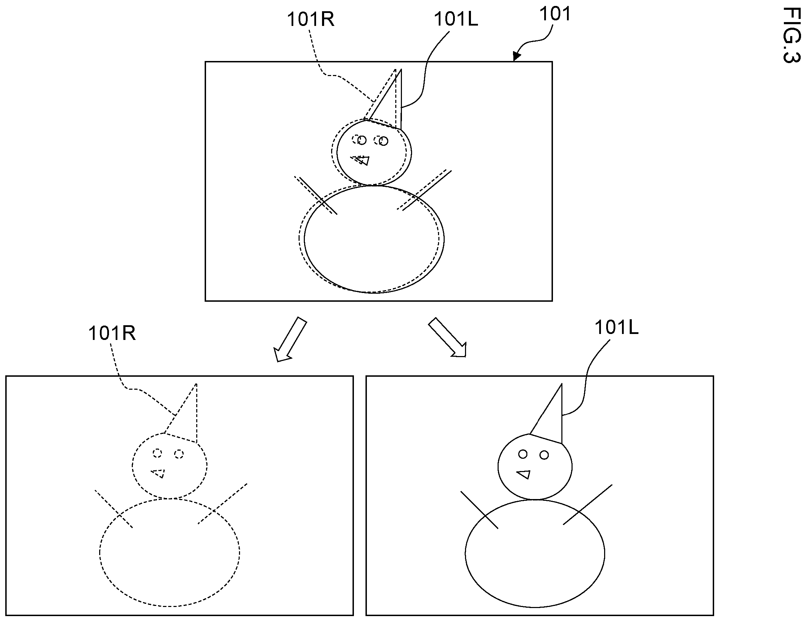

Fig. 3 is a diagram showing an example of a source image that appears stereoscopic according to the first embodiment and a left-eye source image and a right-eye source image included in the source image. The acquirer 11 acquires a left-eye source image 101L and a right-eye source image 101R. The acquirer 11 acquires one source image 101 as the left-eye source image 101L and the right-eye source image 101R. As shown in Fig. 3, the source image 101 is an image that appears stereoscopic, and includes the left-eye source image 101L and the right-eye source image 101R. The source image 101 may not be an image that appears stereoscopic, but may be a so-called two-dimensional image. In such a case, the image processor 10 may generate a left-eye source image 101L and a right-eye source image 101R as the source image 101 that appears stereoscopic, on the basis of the source image that is a two-dimensional image.

The acquirer 11 shown in Fig. 2 may acquire the source image 101, for example, from outside the casing 3 via a network such as the Internet, a public wireless communication network, Wi-Fi, Bluetooth (registered trademark), or infrared communication. The source image 101 acquired by the acquirer 11 may also be stored, for example, in various types of portable memory storage media such as a USB memory, an SD card, or a CD-ROM. In such a case, when the memory storage medium mentioned above is connected to the computer terminal 2, the acquirer 11 reads out and acquires the source image 101 from the memory storage medium. The source image 101 may be stored preliminarily in the memory storage 12, which will be described later.

The memory storage 12 stores, for example, the acquired source image 101, the display image 105, which will be described later, various setting information, programs for executing processes, and so forth. The memory storage 12 may include a memory storage device incorporated within the image processor 10.

The generator 13 generates, on the basis of the left-eye source image 101L and the right-eye source image 101R acquired by the acquirer 11, a left-eye display image 105L and a right-eye display image 105R as the display image 105 to be displayed on the display 20. The display image 105 is an image that appears stereoscopic when displayed on the display 20, and includes a left-eye source image 101L and a right-eye source image 101R.

The generator 13 introduces a color difference ΔE00 between the left-eye display image 105L and the right-eye display image 105R by executing image processing on the basis of a preset program. The generator 13 generates the display image 105, which includes the left-eye display image 105L and the right-eye display image 105R with a color difference ΔE00 introduced. Introducing a color difference between the left-eye display image 105L and the right-eye display image 105R, when the display image 105 is displayed (presented) on the display 20, suppresses the likelihood that the user viewing the display image 105 experiences a sense of incongruity or has difficulty perceiving depth and so forth.

The generator 13 corrects at least one of the left-eye source image 101L and the right-eye source image 101R so that the color difference between the left-eye display image 105L and the right-eye display image 105R becomes a predetermined value. The color difference between the left-eye display image 105L and the right-eye display image 105R is a color difference ΔE00, which incorporates coefficients corresponding to the values of lightness, saturation, and hue to correct the visual non-uniformities inherent in CIELAB. More specifically, the generator 13 corrects at least one of the left-eye source image 101L and the right-eye source image 101R such that the color difference ΔE00 between the left-eye display image 105L and the right-eye display image 105R, calculated on the basis of CIEDE2000 with the 2-degree field of view CIE standard illuminant D65 serving as the reference light, falls within a preset range.

Preferably, the generator 13 generates the left-eye display image 105L and the right-eye display image 105R such that the color difference ΔE00 between the left-eye display image 105L and the right-eye display image 105R is within the range of, for example,

$$0.98 \leq \Delta E00 \leq 4.29.$$

More preferably, the generator 13 generates the left-eye display image 105L and the right-eye display image 105R such that the color difference ΔE00 between the left-eye display image 105L and the right-eye display image 105R is within the range of

$$1.74 \leq \Delta E00 \leq 4.29.$$

Maintaining the color difference ΔE00 between the left-eye display image 105L and the right-eye display image 105R within the above range enables the acquisition of an enhanced visual contrast effect while suppressing binocular rivalry.

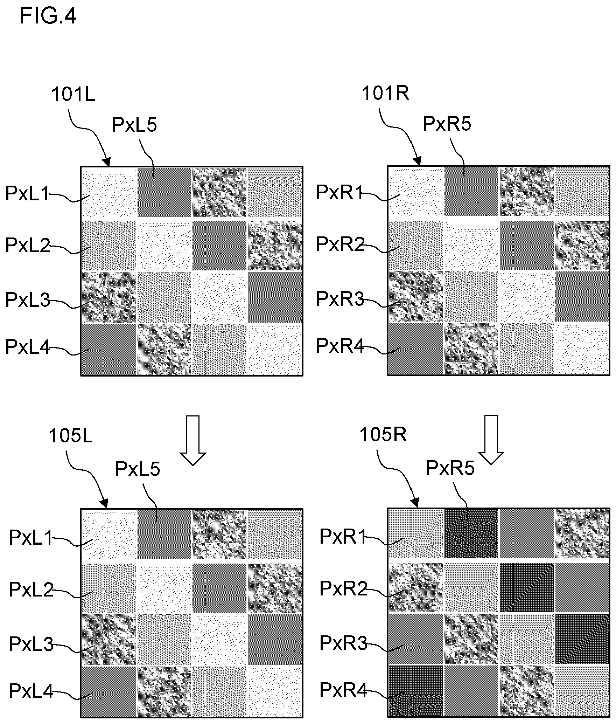

Fig. 4 is a diagram showing an example of the left-eye display image and the right-eye display image generated by correcting respective pixels in the left-eye source image and the right-eye source image according to the first embodiment. As shown in Fig. 4, each of the left-eye source image 101L and the right-eye source image 101R has multiple pixels PxL1, PxL2, ..., PxR1, PxR2, ... arranged in a matrix in the width direction and height direction of each image.

In each of the left-eye source image 101L and the right-eye source image 101R, each of the pixels PxL1, PxL2, ..., PxR1, PxR2, ... displays a color corresponding to the image intended for display. In each of the left-eye source image 101L and the right-eye source image 101R, each of the pixels PxL1, PxL2, ..., PxR1, PxR2, ... has color coordinate values corresponding to the color intended for display set as RGB color coordinates. In the present embodiment, color coordinates in the L*a*b* representation are used as the RGB color coordinates of the pixels PxL1, PxL2, ..., PxR1, PxR2, .... The color coordinates in the L*a*b* representation vary depending on the reference illuminant. In the present embodiment, a value calculated using the CIE standard illuminant D65 with a 2-degree field of view, which is a standard daylight illuminant, is used as the reference illuminant.

The generator 13 generates a left-eye display image 105L and a right-eye display image 105R using the color coordinate values of each of the multiple pixels PxL1, PxL2, ..., PxR1, PxR2, ... that constitute the left-eye source image 101L and the right-eye source image 101R. More specifically, the generator 13 acquires the RGB color coordinates of each of the pixels PxL1, PxL2, ..., PxR1, PxR2, ... that constitute the left-eye source image 101L and the right-eye source image 101R. The RGB color coordinates of each of the multiple pixels PxL1, PxL2, ..., PxR1, PxR2, ... that constitute the left-eye source image 101L and the right-eye source image 101R are included in the data of each of the multiple pixels PxL1, PxL2, ..., PxR1, PxR2, ... that constitute the left-eye source image 101L and the right-eye source image 101R.

The generator 13 corrects the RGB color coordinates of each of the multiple pixels in at least one of the left-eye source image 101L and the right-eye source image 101R so as to introduce a color difference between the pixels PxL1, PxL2, ... of the left-eye source image 101L and the pixels PxR1, PxR2, ... located at corresponding positions in the right-eye source image 101R. The generator 13 uses the corrected RGB color coordinates of each pixel within at least one of the left-eye source image 101L and the right-eye source image 101R to generate the left-eye display image 105L and the right-eye display image 105R.

The generator 13 uses either the left-eye source image 101L or the right-eye source image 101R as a reference, corrects the RGB color coordinates of each of the multiple pixels in the other of the left-eye source image 101L and the right-eye source image 101R, and generates the left-eye display image 105L and the right-eye display image 105R. For example, in the example of Fig. 4, the generator 13 corrects the RGB color coordinates of each of the multiple pixels on the basis of the left-eye source image 101L and the right-eye source image 101R.

The generator 13 generates the right-eye display image 105R by correcting the RGB color coordinates of each of the multiple pixels PxR1, PxR2, ... that constitute the right-eye source image 101R. On the other hand, the left-eye source image 101L serving as a reference is used directly as the left-eye display image 105L without correcting the RGB color coordinates of each of the multiple pixel PxL1, PxL2, ... that constitute the left-eye source image 101L.

In the above description, the generator 13 uses the left-eye source image 101L as a reference and generates the right-eye display image 105R by correcting the RGB color coordinates of each of the multiple pixels PxR1, PxR2, ... on the basis of the right-eye source image 101R. However, the present invention is not limited to this example. The generator 13 may generate the left-eye display image 105L by using the right-eye source image 101R as a reference and correcting the RGB color coordinates of each of the multiple pixels PxL1, PxL2, ... on the basis of the left-eye source image 101L.

Here, when correcting the RGB color coordinates of each of the multiple pixels, the generator 13 corrects the color coordinates of at least one of the three colors R (red), G (green), and B (blue) in the L*a*b* representation. The generator 13 may correct the color coordinates of two or all three of the colors, namely red (R), green (G), and blue (B), in the L*a*b* representation for the multiple pixels.

The generator 13 may also, when correcting at least one of the color coordinates in the L*a*b* representation for each of the multiple pixels, correct the color coordinates by a preset value. The color coordinates of R (red), G (green), and B (blue) in the L*a*b* representation are each set using 128 gradation values ranging from 1 to 128. The generator 13 may correct, for each of the multiple pixels, the color coordinates of at least one of the three colors, R (red), G (green), and B (blue), in the L*a*b* representation so that the color coordinates will be reduced by a predetermined amount (for example, 2).

Here, in the generator 13, it is preferable to set the amount of correction of the color coordinates in the L*a*b* representation so that the color difference $\Delta E00$ between the left-eye display image 105L and the right-eye display image 105R, generated in this manner, falls within the predetermined range mentioned above.

The color difference $\Delta E00$ for each pixel between the left-eye display image 105L and the right-eye display image 105R is calculated from the L* value, the a* value, and the b* value in the L*a*b* representation, using the calculation method described in the literature (Gaurav Sharma et al., "The CIEDE2000 Color-Difference Formula: Implementation Notes, Supplementary Test Data, and Mathematical Observations", COLOR Research and Application, Vol. 30, No. 1, Feb. 2005) and the calculation sheet distributed by the authors of the literature (http://www2.ece.rochester.edu/~gsharma/ciede2000/).

The generator 13 further generates a display image 105 including the left-eye display image 105L and the right-eye display image 105R to cause the display 20 to display the left-eye display image 105L and the right-eye display image 105R as one display image 105. The outputter 14 outputs to the display 20 the data of the display image 105, including the left-eye display image 105L and the right-eye display image 105R, generated by the generator 13.

As shown in Fig. 2, the display 20 is a display unit incorporated in the casing 3, and includes a display controller 22 and a displayer 21 capable of displaying the display image 105. The display controller 22 causes the displayer 21 to display the display image 105 on the basis of the data of the display image 105 including the left-eye display image 105L and the right-eye display image 105R output from the outputter 14. The displayer 21 may display the left-eye display image 105L and the right-eye display image 105R on one display image 105 in a superimposed manner.

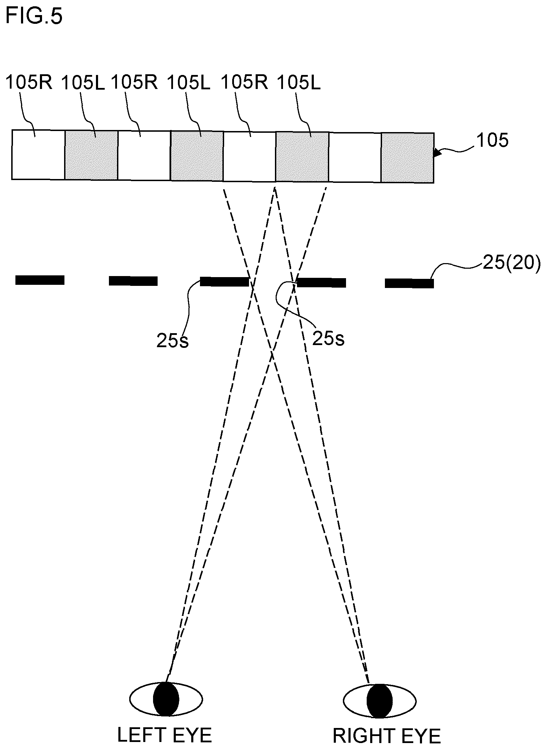

Fig. 5 is a diagram showing an example of a display image that includes the left-eye display image and the right-eye display image, according to the first embodiment. As shown in Fig. 5, the display image 105 displayed on the displayer 21 has pixels of the left-eye display image 105L and pixels of the right-eye display image 105R alternately superimposed and arranged with a shift in a left-right direction. The displayer 21 includes a mask 25 having openings 25s. Due to binocular parallax resulting from the lateral separation of the user's left and right eyes, and due to the provision of the openings 25s in the mask 25, the user visually perceives the left-eye display image 105L with the left eye and the right-eye display image 105R with the right eye.

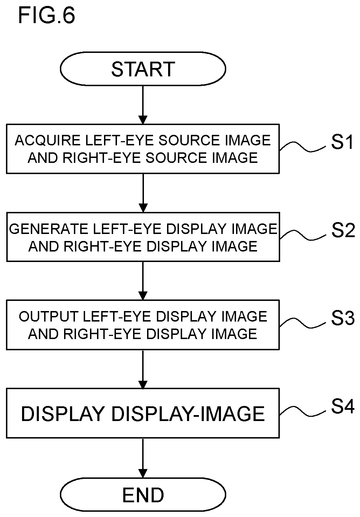

Next, on the basis of the configuration of the image display system 1 described above, an example of an image processing method according to the embodiment will be described. Fig. 6 is a flowchart showing an example of the image processing method according to the embodiment. The image processing method according to the present embodiment includes: acquiring a left-eye source image 101L and a right-eye source image 101R; generating a left-eye display image 105L and a right-eye display image 105R on the basis of the left-eye source image 101L and the right-eye source image 101R acquired; and outputting the left-eye display image 105L and the right-eye display image 105R generated.

As shown in Fig. 6, in Step S1, the acquirer 11 acquires a left-eye source image 101L and a right-eye source image 101R.

In Step S2, the generator 13 generates, on the basis of the left-eye source image 101L and the right-eye source image 101R acquired by the acquirer 11, a left-eye display image 105L and a right-eye display image 105R as the display image 105 to be displayed on the display 20. The generator 13 corrects the left-eye source image 105L and the right-eye source image 105R so that the color difference between the left-eye display image 105L and the right-eye display image 105R becomes a predetermined value. Preferably, the generator 13 generates the left-eye display image 105L and the right-eye display image 105R such that the color difference ΔE00 between the left-eye display image 105L and the right-eye display image 105R is within the range of, for example,

$$0.98 \leq \Delta E00 \leq 4.29.$$

In Step S3, the outputter 14 outputs the left-eye display image 105L and the right-eye display image 105R generated by the generator 13. In Step S4, the displayer 21 displays the display image 105 including the left-eye display image 105L and the right-eye display image 105R. As a result, the user is presented with the display image 105 that has been corrected so that the color difference between the left-eye display image 105L and the right-eye display image 105R becomes a predetermined value, thereby obtaining the effect of improved visual contrast while suppressing the occurrence of binocular rivalry.

As described above, according to the present embodiment, correction is made so that the color difference between the left-eye display image 105L and the right-eye display image 105R becomes a predetermined value. The user receives the presentation of the corrected display image 105 and the visibility of the stereoscopically presented image is improved.

In the embodiment described above, the image display system 1 includes, for example, a computer system. The image display system 1 reads out a detection program stored in the memory storage 12, and executes various processes in accordance with this detection program. This detection program, for example, causes a computer to execute processes of: acquiring a left-eye source image 101L and a right-eye source image 101R; generating a left-eye display image 105L and a right-eye display image 105R on the basis of the left-eye source image 101L and the right-eye source image 101R acquired; and outputting the left-eye display image 105L and the right-eye display image 105R generated, and in generating the left-eye display image 105L and the right-eye display image 105R, at least one of the left-eye source image 101L and the right-eye source image 101R is corrected so that the color difference between the left-eye display image 105L and the right-eye display image 105R becomes a predetermined value. This detection program may be recorded and provided in a computer-readable storage medium.

[Second Embodiment]

Hereunder, a second embodiment is described. In the present embodiment, members similar to those described above are assigned with the same symbols and the descriptions thereof are omitted or simplified. In an image display system 1B according to the present embodiment shown in Fig. 2, a generator 13B corrects the RGB color coordinates of each of multiple pixels in both the left-eye source image 101L and the right-eye source image 101R, and generates the left-eye display image 105L and the right-eye display image 105R.

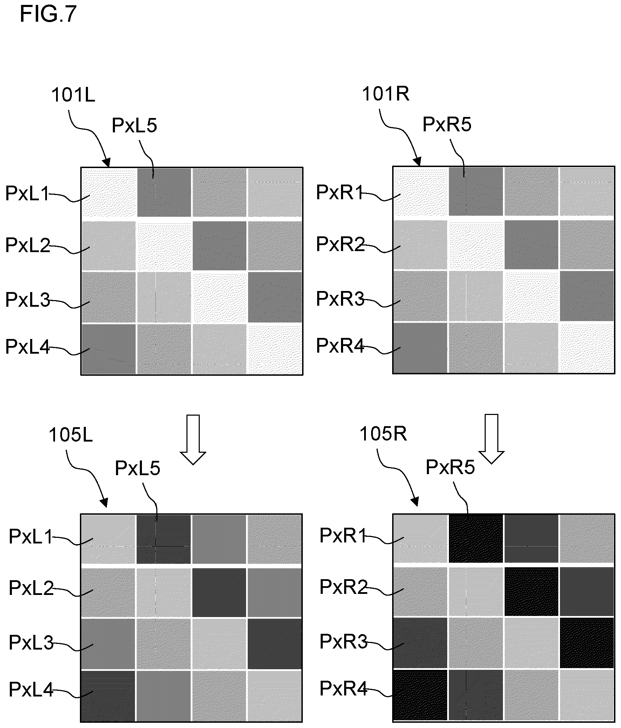

Fig. 7 is a diagram showing an example of the left-eye display image and the right-eye display image generated by correcting respective pixels in the left-eye source image and the right-eye source image according to the second embodiment. As shown in Fig. 7, the generator 13B generates the left-eye display image 105L by correcting the RGB color coordinates of each of the multiple pixels on the basis of the left-eye source image 101L. The generator 13B generates the right-eye display image 105R by correcting the RGB color coordinates of each of the multiple pixels on the basis of the right-eye source image 101R.

At this time, the correction amount of the RGB color coordinates of each of the multiple pixels PxL1, PxL2, ... constituting the left-eye source image 101L, which are corrected when generating the left-eye display image 105L from the left-eye source image 101L, is different from the correction amount of the RGB color coordinates of each of the multiple pixels PxR1, PxR2, ... constituting the right-eye source image 101R, which are corrected when generating the right-eye display image 105R from the right-eye source image 101R. Thus, the generator 13B corrects the left-eye source image 101L and the right-eye source image 101R so that the color difference between the left-eye display image 105L and the right-eye display image 105R becomes a predetermined value.

As described above, according to the present embodiment, in both the left-eye source image 101L and the right-eye source image 101R, the RGB color coordinates of each of the multiple pixels are corrected so that the color difference between the left-eye display image 105L and the right-eye display image 105R becomes a predetermined value. As a result, the user receives the presentation of the corrected display image 105, and the visibility of the stereoscopically presented image is improved.

[Third Embodiment]

Hereunder, a third embodiment will be described. In the present embodiment, members similar to those described above are assigned with the same symbols and the descriptions thereof are omitted or simplified. Here, in the generator 13 of the first embodiment described above, by correcting the color coordinates of each of the multiple pixels by a preset value, the color difference between the left-eye display image 105L and the right-eye display image 105R becomes a predetermined value. In contrast to this, in an image display system 1C of the present embodiment, image processing is performed in the flow as described below.

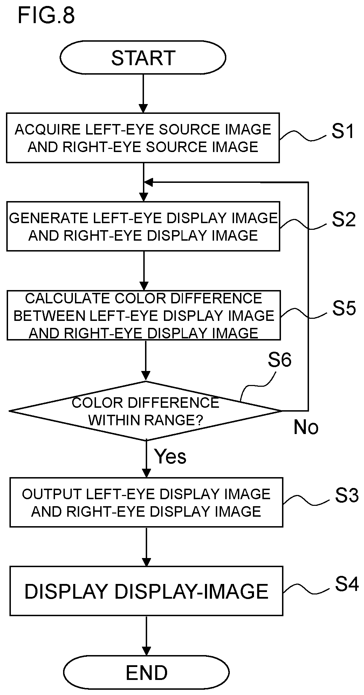

Fig. 8 is a flowchart showing an example of an image processing method in the image display system according to the third embodiment. As shown in Fig. 8, in the image display system 1C of the present embodiment, Step S1 and Step S2 of the image processing method in the first embodiment are executed in a similar manner, and in Step S2, the generator 13C corrects the color coordinates in the L*a*b* representation.

In Step S5 in the present embodiment, which is performed following Step S2, the color difference $\Delta E00$ between the generated left-eye display image 105L and right-eye display image 105R is calculated. Subsequently, in Step S6, the generator 13C determines whether or not the calculated color difference $\Delta E00$ is within a preset range mentioned above.

If the resulting color difference $\Delta E00$ between the generated left-eye display image 105L and right-eye display image 105R is within the preset range, the process proceeds to Step S3 and Step S4 to output and display the left-eye display image 105L and right-eye display image 105R. On the other hand, if the color difference $\Delta E00$ between the generated left-eye display image 105L and right-eye display image 105R is not within the preset range in Step S6, the process returns to Step S2, where the correction amount of the color coordinates of R (red), G (green), and B (blue) in the L*a*b* representation is changed and the left-eye display image 105L and right-eye display image 105R are generated again.

Thus, the correction amount of the color coordinates of R (red), G (green), and B (blue) in the L*a*b* representation may be adjusted until the color difference $\Delta E00$ between the generated left-eye display image 105L and right-eye display image 105R falls within the preset range.

[Fourth Embodiment]

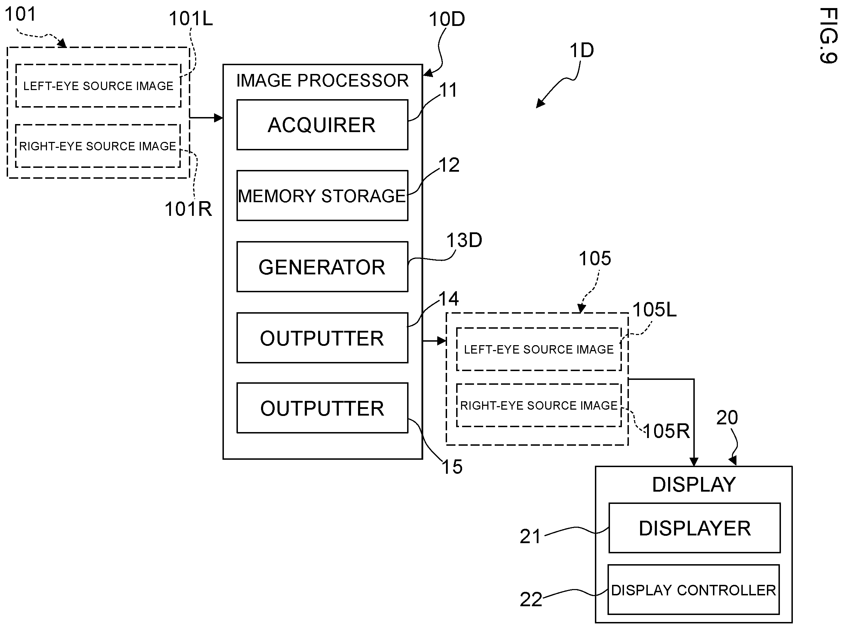

Hereunder, a fourth embodiment will be described. Fig. 9 is a functional block diagram showing an example of an image display system according to the fourth embodiment. In the present embodiment, members similar to those described above are assigned with the same symbols and the descriptions thereof are omitted or simplified. As shown in Fig. 9, in an image display system 1D according to the present embodiment, an image processor 10D includes an evaluation acceptor 15. The evaluation acceptor 15 accepts an evaluation of the display image 105 displayed on the displayer 21, for example, when the user inputs information via the operation inputter 7 provided on the casing 3 (see Fig. 1). Specifically, upon viewing the presented display image 105, the user inputs an evaluation regarding visibility and so forth through the operation inputter **7.** The evaluation acceptor 15 accepts the input evaluation. In a generator 13D, the left-eye display image 105L and the right-eye display image 105R are corrected on the basis of the accepted evaluation.

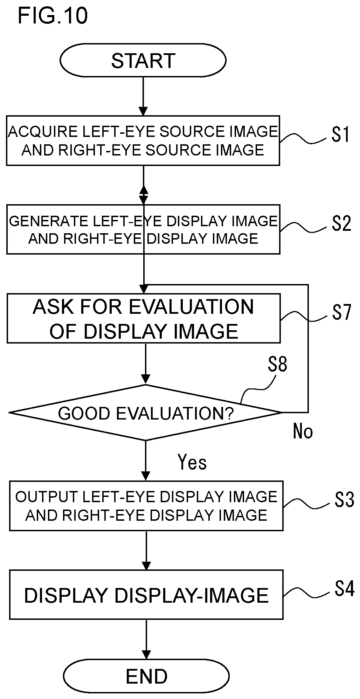

Fig. 10 is a flowchart showing an example of an image processing method in the image display system according to the fourth embodiment. As shown in Fig. 10, in the image display system 1D of the present embodiment, Step S1 and Step S2 of the image processing method in the first embodiment are executed in a similar manner, and in Step S2, the generator 13D corrects the color coordinates of R (red), G (green), and B (blue) in the L*a*b* representation.

In Step S7 in the present embodiment, which is performed following Step S2, the user is asked to evaluate the display image 105 displayed on the displayer 21 on the basis of the generated left-eye display image 105L and right-eye display image 105R, for example by displaying a message on the displayer 21.

As a result, in Step S8, if a positive evaluation (for example, an evaluation of "easy to see") is obtained from the user regarding the displayed display image 105, the process proceeds to Step S3 and Step S4 to output and display the left-eye display image 105L and the right-eye display image 105R. On the other hand, in Step S8, if a positive evaluation is not obtained from the user regarding the display image 105 (for example, an evaluation of "difficult to see" is obtained), the process returns to Step S2 to change the correction amount of the color coordinates of R (red), G (green), and B (blue) in the L*a*b* representation and generate the left-eye display image 105L and the right-eye display image 105R again.

Thus, according to the present embodiment, by accepting an evaluation from the user regarding the display image 105 displayed on the displayer 21 and correcting the left-eye display image 105L and the right-eye display image 105R in accordance with the evaluation content, the visibility of the image can be further improved. This makes it possible to more effectively improve image visibility, for example, in response to individual differences in the displayer 21, variations in specifications depending on the destination region, and differences in evaluations among multiple users.

[Fifth Embodiment]

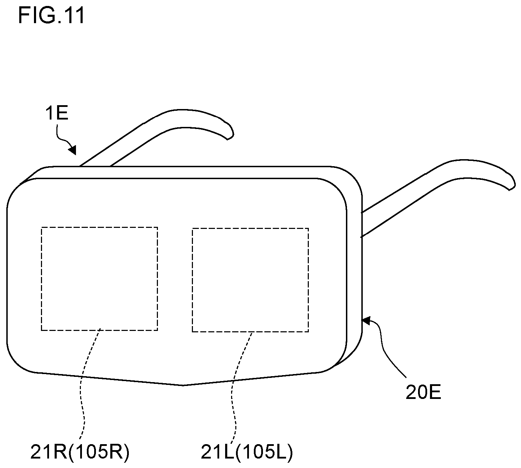

Hereunder, a fifth embodiment will be described. Fig. 11 is a diagram showing an example of an image display system according to a fifth embodiment. In the present embodiment, members similar to those described above are assigned with the same symbols and the descriptions thereof are omitted or simplified. As shown in Fig. 11, a display 20E of an image display system 1E in the present embodiment includes a left-eye displayer 21L and a right-eye displayer 21R, separately. The left-eye displayer 21L displays a left-eye display image 105L. The right-eye displayer 21R displays a right-eye display image 105R. The display 20E is configured so as to be wearable on the user's head, for example, like spectacles or goggles.

Such a configuration also uses a configuration similar to that shown in the first to fourth embodiments described above to generate the left-eye display image 105L and the right-eye display image 105R so that the color difference between the left-eye display image 105L and the right-eye display image 105R becomes a predetermined value. The generated left-eye display image 105L is then displayed on the left-eye displayer 21L, and the right-eye display image 105R is displayed on the right-eye displayer 21R.

As described above, according to the present embodiment, correction is made so that the color difference between the left-eye display image 105L and the right-eye display image 105R becomes a predetermined value, improving the visibility of the stereoscopically presented image.

[Sixth Embodiment]

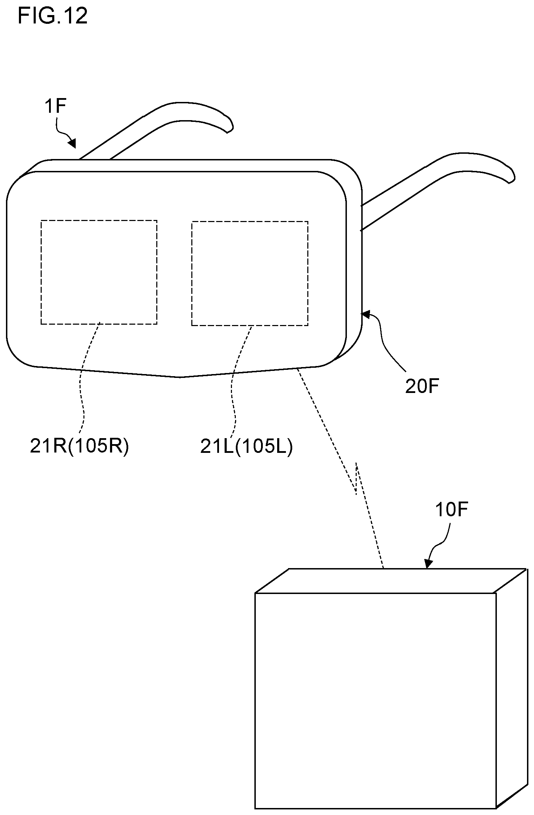

Hereunder, a sixth embodiment will be described. Fig. 12 is a diagram showing an example of an image display system according to the sixth embodiment. In the present embodiment, members similar to those described above are assigned with the same symbols and the descriptions thereof are omitted or simplified. As shown in Fig. 12, in an image display system 1F of the present embodiment, an image processor 10F and a display 20F are separate units.

In such a case, the image processor 10F may be incorporated into a computer device such as a personal computer, a tablet terminal, or a smartphone. Meanwhile, the display 20F is configured so as to be wearable on the user's head like spectacles or goggles shown in the fifth embodiment. The display 20F may also be, for example, a stationary monitor or a head-mountable display that is provided separately from the image processor 10F. The image processor 10F and the display 20F are configured to be connectable via a wired or wireless network.

In such a configuration also, the visibility of the image stereoscopically presented by the display 20F can be improved by correcting the color difference between the left-eye display image 105L and the right-eye display image 105R to a predetermined value.

Examples

Image Creation)

A Japanese sentence consisting of gray (RGB = 128, 128, 128) characters in various sizes was placed on a white (RGB = 255, 255, 255) background to create image P1, as listed in Table 1. Similarly, images P2 through P16, also listed in Table 1, were created by reducing one of the RGB values of the gray characters.

[Table 1]

|  | RED R | GREEN G | BLUE B |
|---|---|---|---|
| IMAGE P1 | 128 | 128 | 128 |
| IMAGE P2 | 126 | 128 | 128 |
| IMAGE P3 | 124 | 128 | 128 |
| IMAGE P4 | 122 | 128 | 128 |
| IMAGE P5 | 120 | 128 | 128 |
| IMAGE P6 | 118 | 128 | 128 |
| IMAGE P7 | 128 | 126 | 128 |
| IMAGE P8 | 128 | 124 | 128 |
| IMAGE P9 | 128 | 122 | 128 |
| IMAGE P10 | 128 | 120 | 128 |
| IMAGE P11 | 128 | 118 | 128 |
| IMAGE P12 | 128 | 128 | 126 |
| IMAGE P13 | 128 | 128 | 124 |
| IMAGE P14 | 128 | 128 | 122 |

(continued)

|  | RED R | GREEN G | BLUE B |
|---|---|---|---|
| IMAGE P15 | 128 | 128 | 120 |
| IMAGE P16 | 128 | 128 | 118 |

Calculation of Color Difference

The right-eye display image and the left-eye display image were combined according to the combinations shown in the table, and the color difference ΔE00 between the right-eye display image and the left-eye display image in each display image, which served as an example or a comparative example, is also shown.

[Table 2]

|  | LEFT-EYE DISPLAY IMAGE P | RIGHT-EYE DISPLAY IMAGE P | COLOR DIFFERENCE ΔE00 | NUMBER OF PEOPLE WHO FOUND IT EASY TO VIEW | NO CHANGE | NUMBER OF PEOPLE WHO FOUND IT DIFFICULT TO VIEW |
|---|---|---|---|---|---|---|
| EXAMPLE 1 | IMAGE P1 | IMAGE P12 | 0.98 | 2 | 3 | 0 |
| EXAMPLE 2 | IMAGE P1 | IMAGE P2 | 1.74 | 3 | 2 | 0 |
| EXAMPLE 3 | IMAGE P1 | IMAGE P3 | 1.98 | 4 | 1 | 0 |
| EXAMPLE 4 | IMAGE P1 | IMAGE P7 | 1.98 | 3 | 2 | 0 |
| EXAMPLE 5 | IMAGE P1 | IMAGE P13 | 2.56 | 3 | 2 | 0 |
| EXAMPLE 6 | IMAGE P1 | IMAGE P4 | 3.11 | 3 | 1 | 0 |
| EXAMPLE 7 | IMAGE P1 | IMAGE P14 | 3.27 | 3 | 2 | 0 |
| EXAMPLE 8 | IMAGE P1 | IMAGE P8 | 3.86 | 3 | 2 | 0 |
| EXAMPLE 9 | IMAGE P1 | IMAGE P5 | 4.29 | 0 | 5 | 0 |
| EXAMPLE 10 | IMAGE P1 | IMAGE P15 | 4.60 | 2 | 0 | 3 |
| EXAMPLE 11 | IMAGE P1 | IMAGE P9 | 4.84 | 0 | 2 | 3 |
| EXAMPLE 12 | IMAGE P1 | IMAGE P16 | 5.24 | 2 | 2 | 1 |
| EXAMPLE 13 | IMAGE P1 | IMAGE P6 | 5.44 | 0 | 2 | 3 |
| EXAMPLE 14 | IMAGE P1 | IMAGE P10 | 7.44 | 2 | 0 | 3 |
| EXAMPLE 15 | IMAGE P1 | IMAGE P11 | 8.58 | 2 | 2 | 1 |
| COMPARATIVE EXAMPLE 1 | IMAGE P1 | IMAGE P1 | 0.00 | 1 | 2 | 2 |

The color difference ΔE00 between the characters in the image set was converted from RGB color coordinates to L*a*b* color coordinates, using a color code conversion tool (https://syncer.jp/color-converter). Subsequently, the color difference ΔE00 was calculated from the previously calculated L* value, a* value, and b* value of the characters in the two images, using the calculation method described in the literature (Gaurav Sharma et al., "The CIEDE2000 Color-Difference Formula: Implementation Notes, Supplementary Test Data, and Mathematical Observations", COLOR Research and Application, Vol. 30, No. 1, Feb. 2005) and the calculation sheet distributed by the authors of the literature (http://www2. ece.rochester.edu/~gsharma/ciede2000/) .

Image Evaluation

A Nintendo 3DS (a product name manufactured by Nintendo Co., Ltd.) was used as the image display. The image pairs in Table 2 were converted into a file format readable by 3DS using the "StereoPhoto Maker Ver4.32d for 3DS" software (http://stereo.jpn.org/jpn/3ds/index.html) and then stereoscopically displayed on the display.

The evaluation was conducted using the image pair from Comparative Example 1, composed of two identical images, as a reference, to determine whether the color difference between the two images resulted in any perceptual change compared to Comparative Example 1.

Such an evaluation was conducted on five participants, and the results were evaluated based on the number of participants who perceived an effect. The results are shown in Table 3.

In Example 1, where the $\Delta E00$ was 0.98, 2 out of 5 participants reported that the characters were easier to view compared to Comparative Example 1, where the $\Delta E$ was 0.00. In Example 2, where the $\Delta E00$ was 1.74, a majority, that is, 3 out of 5 participants, reported that the characters were easier to view. In Examples 2 through 8, the RGB of the right-eye image was changed, and regardless of which color was changed, if the color difference $\Delta E00$ ranged from 1.74 to 3.86, a majority of participants found the image easier to view.

On the other hand, in Examples 9 through 15, where the color difference $\Delta E00$ was 4.29 or greater, some participants found the image easier to view compared to Comparative Example 1, whereas others found it more difficult to view. This reduced visibility is believed to have resulted from binocular rivalry caused by an excessively large color difference.

The embodiments and working examples of the invention have been described above. However, the technical scope of the present invention is not limited to the aspects described in the embodiments and working examples described above. One or more of the requirements described in the above embodiments and working examples may be omitted in some cases. One or more of the requirements described in the above embodiments and working examples may be appropriately combined. Furthermore, to the extent permitted by law, the disclosures of all documents cited in the present specification and Japanese Patent Application No. 2022-199539 are incorporated by reference as part of the description herein.

Supplementary Notes

The present embodiments include the contents set forth in supplementary notes 1 through 9 below.

(Supplementary Note 1)

An image processor comprising

an acquirer that acquires a left-eye source image and a right-eye source image,
a generator that generates a left-eye display image and a right-eye display image on the basis of the left-eye source image and the right-eye source image acquired by the acquirer, and
an outputter that outputs the left-eye display image and the right-eye display image generated by the generator,
wherein the generator corrects at least one of the left-eye source image and the right-eye source image so that a color difference between the left-eye display image and the right-eye display image becomes a predetermined value.

(Supplementary Note 2)

The image processor according to supplementary note 1,

wherein the generator generates the left-eye display image and the right-eye display image such that
a color difference $\Delta E00$ between the left-eye display image and the right-eye display image, calculated on the basis of CIEDE2000 with a CIE standard illuminant D65 of a 2-degree field of view as a reference light, falls within a range of

$$0.98 \leq \Delta E00 \leq 4.29.$$

(Supplementary Note 3)

The image processor according to supplementary note 2,

wherein the generator generates the left-eye display image and the right-eye display image such that

a color difference ΔE00 between the left-eye display image and the right-eye display image falls within a range of

$$1.74 \leq \Delta E00 \leq 4.29.$$

(Supplementary Note 4)

The image processor according to any one of supplementary notes 1 to 3,
wherein the generator generates the left-eye display image and the right-eye display image by using color coordinate values of each of multiple pixels that constitute the left-eye source image and the right-eye source image.

(Supplementary Note 5)

The image processor according to supplementary note 4,

wherein the generator
acquires RGB color coordinates for each of multiple pixels constituting the left-eye source image and the right-eye source image, and
wherein the generator corrects RGB color coordinates of each of multiple pixels in at least one of the left-eye source image and the right-eye source image so that a color difference between a pixel of the left-eye source image and a pixel at a position in the right-eye source image corresponding to the pixel of the left-eye source image becomes a determined value, and generates the left-eye display image and the right-eye display image.

(Supplementary Note 6)

The image processor according to supplementary note 5,
wherein the generator uses either the left-eye source image or the right-eye source image as a reference, corrects RGB color coordinates of each of multiple pixels in the other of the left-eye source image and the right-eye source image, and generates the left-eye display image and the right-eye display image.

(Supplementary Note 7)

The image processor according to supplementary note 5,
wherein the generator corrects RGB color coordinates of each of multiple pixels in both the left-eye source image and the right-eye source image, and generates the left-eye display image and the right-eye display image.

(Supplementary Note 8)

The image processor according to any one of supplementary notes 1 to 7,
wherein the acquirer acquires one source image as the left-eye source image and the right-eye source image.

(Supplementary Note 9)

An image display system comprising

the image processor according to any one of supplementary notes 1 to 8, and
a display having a displayer capable of displaying the left-eye display image and the right-eye display image output from the outputter.

Description of Reference Signs

1, 1B, 1C, 1D, 1E, 1F: Image display system
10, 10D, 10F: Image processor
11: Acquirer
13, 13B, 13C, 13D: Generator
14: Outputter

20, 20E, 20F: Display
21: Displayer
101: Source image
101L: Left-eye source image
101R: Right-eye source image
105: Display image
105L: Left-eye display image
105L: Eye display image
105R: Right-eye display image

**Claims**

1. An image processor comprising

   an acquirer that acquires a left-eye source image and a right-eye source image,
   a generator that generates a left-eye display image and a right-eye display image based on the left-eye source image and the right-eye source image acquired by the acquirer, and
   an outputter that outputs the left-eye display image and the right-eye display image generated by the generator,
   wherein the generator corrects at least one of the left-eye source image and the right-eye source image so that a color difference between the left-eye display image and the right-eye display image becomes a predetermined value.

2. The image processor according to claim 1,

   wherein the generator generates the left-eye display image and the right-eye display image such that
   a color difference $\Delta E00$ between the left-eye display image and the right-eye display image, calculated on the basis of CIEDE2000 with a CIE standard illuminant D65 of a 2-degree field of view as a reference light, falls within a range of

$$0.98 \leq \Delta E00 \leq 4.29.$$

3. The image processor according to claim 2,

   wherein the generator generates the left-eye display image and the right-eye display image such that
   a color difference $\Delta E00$ between the left-eye display image and the right-eye display image falls within a range of

$$1.74 \leq \Delta E00 \leq 4.29.$$

4. The image processor according to claim 1,
   wherein the generator generates the left-eye display image and the right-eye display image by using color coordinate values of each of multiple pixels that constitute the left-eye source image and the right-eye source image.

5. The image processor according to claim 4,

   wherein the generator
   acquires RGB color coordinates for each of multiple pixels constituting the left-eye source image and the right-eye source image, and
   wherein the generator corrects RGB color coordinates of each of multiple pixels in at least one of the left-eye source image and the right-eye source image so that a color difference between a pixel of the left-eye source image and a pixel at a position in the right-eye source image corresponding to the pixel of the left-eye source image becomes a determined value, and generates the left-eye display image and the right-eye display image.

6. The image processor according to claim 5,
   wherein the generator uses either the left-eye source image or the right-eye source image as a reference, corrects RGB color coordinates of each of multiple pixels in the other of the left-eye source image and the right-eye source image, and generates the left-eye display image and the right-eye display image.

7. The image processor according to claim 5,
wherein the generator corrects RGB color coordinates of each of multiple pixels in both the left-eye source image and the right-eye source image, and generates the left-eye display image and the right-eye display image.

8. The image processor according to claim 1,
wherein the acquirer acquires one source image as the left-eye source image and the right-eye source image.

9. An image display system comprising

the image processor according to any one of claims 1 to 8, and
a display having a displayer capable of displaying the left-eye display image and the right-eye display image output from the outputter.

10. The image display system according to claim 9,
wherein the displayer displays the left-eye display image and the right-eye display image in a superimposed manner.

11. An image processing method comprising

acquiring a left-eye source image and a right-eye source image,
generating a left-eye display image and a right-eye display image on the basis of the left-eye source image and the right-eye source image acquired by the acquirer, and
outputting the left-eye display image and the right-eye display image generated,
wherein in generating the left-eye display image and the right-eye display image, at least one of the left-eye source image and the right-eye source image is corrected so that a color difference between the left-eye display image and the right-eye display image becomes a predetermined value.

12. An image processing program that causes a computer to execute processes of

acquiring a left-eye source image and a right-eye source image,
generating a left-eye display image and a right-eye display image on the basis of the left-eye source image and the right-eye source image acquired by the acquirer, and
outputting the left-eye display image and the right-eye display image generated,
wherein in generating the left-eye display image and the right-eye display image, at least one of the left-eye source image and the right-eye source image is corrected so that a color difference between the left-eye display image and the right-eye display image becomes a predetermined value.

FIG.1

EP 4 637 135 A1

**FIG.2**

1,1B,1C

101
101L
LEFT-EYE SOURCE IMAGE
RIGHT-EYE SOURCE IMAGE
101R

IMAGE PROCESSING DEVICE — 10

ACQUIRER — 11

MEMORY STORAGE — 12

GENERATOR — 13,13B,13C

OUTPUTTER — 14

105
105L
LEFT-EYE SOURCE IMAGE
RIGHT-EYE SOURCE IMAGE
105R

DISPLAY — 20

DISPLAYER — 21

DISPLAY CONTROLLER — 22

FIG.3

FIG.4

FIG.5

105R 105L 105R 105L 105R 105L

105

25(20)

25s                    25s

LEFT EYE          RIGHT EYE

## FIG.6

```
        START
          │
          ▼
┌──────────────────────────────┐
│ ACQUIRE LEFT-EYE SOURCE IMAGE │ ── S1
│ AND RIGHT-EYE SOURCE IMAGE    │
└──────────────────────────────┘
          │
          ▼
┌──────────────────────────────┐
│ GENERATE LEFT-EYE DISPLAY IMAGE│ ── S2
│ AND RIGHT-EYE DISPLAY IMAGE   │
└──────────────────────────────┘
          │
          ▼
┌──────────────────────────────┐
│ OUTPUT LEFT-EYE DISPLAY IMAGE │ ── S3
│ AND RIGHT-EYE DISPLAY IMAGE   │
└──────────────────────────────┘
          │
          ▼
┌──────────────────────────────┐
│   DISPLAY DISPLAY-IMAGE       │ ── S4
└──────────────────────────────┘
          │
          ▼
         END
```

FIG.7

FIG.8

```
                    ┌─────────────┐
                    │    START    │
                    └──────┬──────┘
                           │
                           ▼
        ┌──────────────────────────────────┐
        │ ACQUIRE LEFT-EYE SOURCE IMAGE     │ ⌇ S1
        │ AND RIGHT-EYE SOURCE IMAGE        │
        └──────────────────┬───────────────┘
                           │  ◄──────────────┐
                           ▼                 │
        ┌──────────────────────────────────┐│
        │ GENERATE LEFT-EYE DISPLAY IMAGE   │⌇ S2
        │ AND RIGHT-EYE DISPLAY IMAGE       ││
        └──────────────────┬───────────────┘│
                           │                 │
                           ▼                 │
        ┌──────────────────────────────────┐│
        │ CALCULATE COLOR DIFFERENCE        ││
        │ BETWEEN LEFT-EYE DISPLAY IMAGE    │⌇ S5
        │ AND RIGHT-EYE DISPLAY IMAGE       ││
        └──────────────────┬───────────────┘│
                           │          S6     │
                           ▼                 │
                  ╱────────────────╲         │
                 ╱  COLOR DIFFERENCE ╲  No    │
                ╲   WITHIN RANGE?    ╱────────┘
                 ╲────────┬─────────╱
                        Yes
                          │
                          ▼
        ┌──────────────────────────────────┐
        │ OUTPUT LEFT-EYE DISPLAY IMAGE     │ ⌇ S3
        │ AND RIGHT-EYE DISPLAY IMAGE       │
        └──────────────────┬───────────────┘
                           │
                           ▼
        ┌──────────────────────────────────┐
        │   DISPLAY DISPLAY-IMAGE           │ ⌇ S4
        └──────────────────┬───────────────┘
                           │
                           ▼
                    ┌─────────────┐
                    │     END     │
                    └─────────────┘
```

FIG.9

FIG.10

```
          ┌─────────────────┐
          │      START       │
          └─────────────────┘
                   │
                   ▼
   ┌─────────────────────────────────┐
   │ ACQUIRE LEFT-EYE SOURCE IMAGE    │ ⌇ S1
   │ AND RIGHT-EYE SOURCE IMAGE       │
   └─────────────────────────────────┘
                   │
                   ▼
   ┌─────────────────────────────────┐
   │ GENERATE LEFT-EYE DISPLAY IMAGE  │ ⌇ S2
   │ AND RIGHT-EYE DISPLAY IMAGE      │
   └─────────────────────────────────┘
                   │
                   ▼
   ┌─────────────────────────────────┐
   │     ASK FOR EVALUATION           │ ⌇ S7
   │     OF DISPLAY IMAGE             │
   └─────────────────────────────────┘
                   │
                   ▼         S8
              ◇─────────────◇
              GOOD EVALUATION?          No
              ◇─────────────◇
                   │ Yes
                   ▼
   ┌─────────────────────────────────┐
   │ OUTPUT LEFT-EYE DISPLAY IMAGE    │ ⌇ S3
   │ AND RIGHT-EYE DISPLAY IMAGE      │
   └─────────────────────────────────┘
                   │
                   ▼
   ┌─────────────────────────────────┐
   │    DISPLAY DISPLAY-IMAGE         │ ⌇ S4
   └─────────────────────────────────┘
                   │
                   ▼
          ┌─────────────────┐
          │       END        │
          └─────────────────┘
```

FIG.11

1E

21R(105R)     21L(105L)

20E

FIG.12

1F

21R(105R)    21L(105L)

20F

10F

**EP 4 637 135 A1**

## INTERNATIONAL SEARCH REPORT

| International application No. |
|---|
| **PCT/JP2023/025620** |

| A. | CLASSIFICATION OF SUBJECT MATTER |
|---|---|

*H04N 13/133*(2018.01)i; *G09G 5/02*(2006.01)i; *G09G 5/36*(2006.01)i; *H04N 13/122*(2018.01)i; *H04N 13/15*(2018.01)i
FI:   H04N13/133; G09G5/02 B; G09G5/36 500; H04N13/122; H04N13/15

According to International Patent Classification (IPC) or to both national classification and IPC

| B. | FIELDS SEARCHED |
|---|---|

Minimum documentation searched (classification system followed by classification symbols)

H04N13/133; G09G5/02; G09G5/36; H04N13/122; H04N13/15

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2012/0320036 A1 (LG DISPLAY CO., LTD.) 20 December 2012 (2012-12-20)<br>paragraphs [0044]-[0078], fig. 5-8 | 1-12 |
| A | JP 2011-59658 A (SONY CORPORATION) 24 March 2011 (2011-03-24)<br>entire text, all drawings | 1-12 |
| A | US 2013/0163856 A1 (INDUSTRY-ACADEMIC COOPERATION FOUNDATION,<br>YONSEI UNIVERSITY) 27 June 2013 (2013-06-27)<br>entire text, all drawings | 1-12 |
| A | US 2012/0105595 A1 (ALTEK CORP.) 03 May 2012 (2012-05-03)<br>entire text, all drawings | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/025620**

| Patent document cited in search report | | | Publication date (day/month/year) | Patent family member(s) | | | Publication date (day/month/year) |
|---|---|---|---|---|---|---|---|
| US | 2012/0320036 | A1 | 20 December 2012 | KR | 10-2012-0139380 | A | |
| | | | | CN | 102831866 | A | |
| JP | 2011-59658 | A | 24 March 2011 | US | 2011/0037829 | A1 | |
| | | | | EP | 2285125 | A2 | |
| | | | | CN | 101998131 | A | |
| US | 2013/0163856 | A1 | 27 June 2013 | KR | 10-1316196 | B1 | |
| US | 2012/0105595 | A1 | 03 May 2012 | TW | 201218120 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016177281 A

- JP 2022199539 A

**Non-patent literature cited in the description**

- **GAURAV SHARMA et al.** The CIEDE2000 Color-Difference Formula: Implementation Notes, Supplementary Test Data, and Mathematical Observations. *COLOR Research and Application*, February 2005, vol. 30 (1)